# EUROPEAN PATENT APPLICATION

(11) **EP 2 088 546 A1**
(43) Date of publication of application: **12.08.2009**
(21) Application number: 08151243.6
(22) Date of filing: 08.02.2008
(51) Int. Cl.: G06Q 10/00

(54) **Electronic device and method for determining time periods for meetings**

(71) Applicant: Research In Motion Limited, Waterloo, Ontario N2L 3W8 (CA)
(72) Inventor: Mujkic, Alen, Mississauga Ontario L5J 2E3 (CA); Bos, Jeffrey, Waterloo Ontario N2V 2A7 (CA); Kramer, Kem-Laurin, Kitchener Ontario N2G 3H7 (CA)
(74) Representative: Rickard, David John

(57) **Abstract**

A portable electronic device method of determining time periods for a meeting includes receiving an indication of at least two invitees for the meeting, obtaining calendar data for the invitees, determining free time periods for the invitees based on the calendar data, and creating a list of the free time periods for the invitees.

## Description

The present application relates generally to scheduling of meetings at a portable electronic device.

Portable electronic devices including, for example, smart telephones and wireless PDAs are becoming increasingly common and typically integrate functions of personal information management such as calendaring and data communications such as e-mail, World Wide Web browsing and telecommunications in a single device. Such devices run on a wide variety of networks from data-only networks such as Mobitex and DataTAC to complex voice and data networks such as GSM/GPRS, CDMA, EDGE, UMTS and CDMA2000 networks.

Users commonly store calendar event details such as meeting particulars at the portable electronic device for display in an electronic calendar view on the device. Some portable electronic devices allow the user to schedule meetings with invitees by creating a new meeting and entering the details including the contact information, such as e-mail information, for each of the invitees. An electronic notification is then sent to the invitees, typically in the form of an invitation sent via e-mail.

Unfortunately, meetings can be difficult to schedule as conflicts can arise with other scheduled events. This problem is compounded when there are numerous invitees to the meeting and determining appropriate meeting times becomes difficult.

Improvements in determining time periods for a meeting are therefore desirable.

### GENERAL

It is desirable to obviate or mitigate at least one disadvantage of the prior art.

In a first aspect, there may be provided a method of determining time periods for a meeting according to an embodiment. The method may comprise receiving an indication of at least two invitees for the meeting, obtaining calendar data for the invitees, determining free time periods for the invitees based on the calendar data, and creating a list of the free time periods for the invitees.

In another aspect, there may be provided an electronic device for determining time periods for a meeting. The electronic device may comprise an output unit, an input unit, a memory device, a processor connected to the memory device, the input unit, and the output unit, and an application. The application may be stored in the memory device for execution by the processor for receiving an indication of at least two invitees for the meeting, obtaining calendar data for the invitees, determining free time periods for the invitees based on the calendar data for the at least two invitees, and creating a list of the free time periods for the invitees.

In yet another aspect, there may be provided a computer program product for an electronic device, the computer program product comprising a computer-readable medium having computer-readable code embodied therein for receiving an indication of at least two invitees for a meeting, obtaining calendar data for the invitees, determining free time periods for the invitees based on the calendar data for the at least two invitees, and creating a list of the free time periods for the invitees.

Other aspects and features of the will become apparent to those ordinarily skilled in the art upon review of the following description of specific in conjunction with the accompanying figures.

### BRIEF DESCRIPTION OF THE DRAWINGS

Embodiments of the present application will now be described, by way of example only, with reference to the attached Figures, wherein:
Figure 1 is a block diagram of an exemplary embodiment of a portable electronic device;
Figure 2 is an exemplary block diagram of a communication subsystem component of Figure 1;
Figure 3 is a block diagram of an exemplary implementation of a node of a wireless network;
Figure 4 is a block diagram illustrating components of an exemplary configuration of a host system that the portable electronic device can communicate with;
Figure 5 is an exemplary portable electronic device according to one embodiment;
Figure 6 is a simplified flowchart depicting steps in a method of determining time periods for a meeting according to one embodiment;
Figures 7 to 16 show exemplary screen shots in the determining time periods for a meeting of Figure 6;
Figures 17 to 20 show exemplary screen shots in a method of determining time periods for a meeting according to Figure 6;
Figure 21 is a simplified flow chart illustrating steps in a method of determining time periods for a meeting according to another aspect;
Figures 22 to 24 show exemplary screen shots in a method of determining time periods for a meeting according to Figure 21;
Figure 25 shows another exemplary screen shot in the method of determining time periods for a meeting of Figure 6; and
Figure 26 is a flow chart illustrating sub-steps in a method of determining time periods for a meeting according to an aspect;
Figures 27 and 28 show further exemplary screen shots in the method of determining time periods for a meeting of Figure 6; and
Figure 29 shows yet a further exemplary screen shot in the method of determining time periods for a meeting.

### DESCRIPTION OF PREFERRED EMBODIMENTS

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The embodiments described herein generally relate to a portable electronic device. Examples of portable electronic devices include mobile or handheld wireless communication devices such as pagers, cellular phones, cellular smart-phones, wireless organizers, personal digital assistants, computers, laptops, handheld wireless communication devices, wirelessly enabled notebook computers and the like.

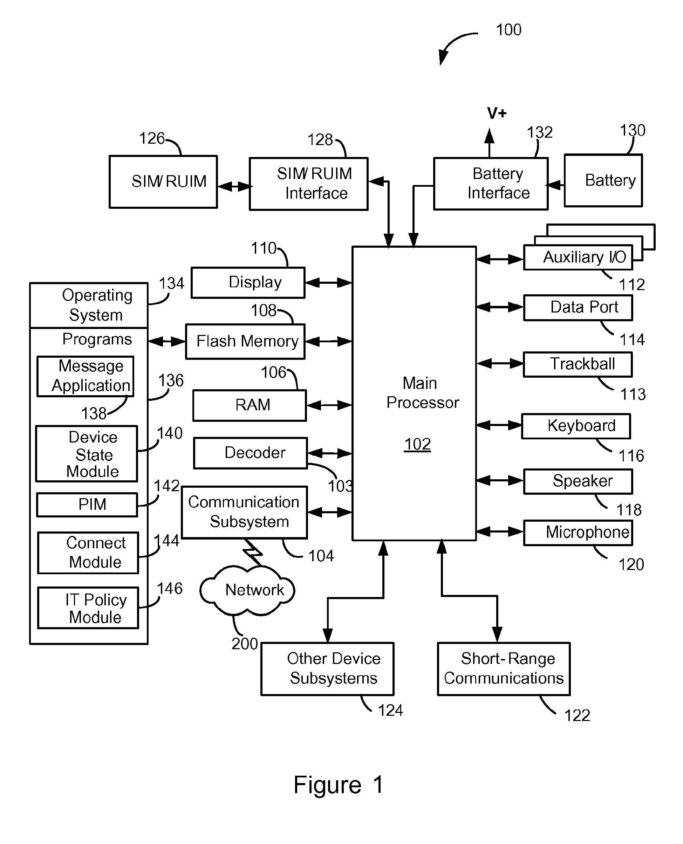

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). To aid the reader in understanding the structure of the portable electronic device and how it communicates with other devices and host systems, reference will now be made to Figures 1 through 4.

Referring first to Figure 1, shown therein is a block diagram of an exemplary embodiment of a portable electronic device 100. The portable electronic device 100 includes a number of components such as a main processor 102 that controls the overall operation of the portable electronic device 100. Communication functions, including data and voice communications, are performed through a communication subsystem 104. Data received by the portable electronic device 100 can be decompressed and decrypted by a decoder 103, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem 104 receives messages from and sends messages to a wireless network 200. In this exemplary embodiment of the portable electronic device 100, the communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 200 associated with portable electronic device 100 is a GSM/GPRS wireless network in one exemplary implementation, other wireless networks may also be associated with the portable electronic device 100 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks such as EDGE and UMTS. Some other examples of data-centric networks include WiFi 802.11, Mobitex^{™} and DataTAC^{™} network communication systems. Examples of other voice-centric data networks include Personal Communication Systems (PCS) networks like GSM and Time Division Multiple Access (TDMA) systems. The main processor 102 also interacts with additional subsystems such as a Random Access Memory (RAM) 106, a flash memory 108, a display 110, an auxiliary input/output (I/O) subsystem 112, a data port 114, a trackball 115, a keyboard 116, a speaker 118, a microphone 120, short-range communications 122 and other device subsystems 124.

Some of the subsystems of the portable electronic device 100 perform communication-related functions, whereas other subsystems may provide "resident" or on-device functions. By way of example, the display 110, the trackball 115 and the keyboard 116 may be used for both communication-related functions, such as entering a text message for transmission over the network 200, and device-resident functions such as a calculator or task list.

The portable electronic device 100 can send and receive communication signals over the wireless network 200 after network registration or activation procedures have been completed. Network access is associated with a subscriber or user of the portable electronic device 100. To identify a subscriber, a SIM/RUIM card 126 (i.e. Subscriber Identity Module or a Removable User Identity Module) is inserted into a SIM/RUIM interface 128 in order to communicate with a network. The SIM card or RUIM 126 is one type of a conventional "smart card" that can be used to identify a subscriber of the portable electronic device 100 and to personalize the portable electronic device 100, among other things. In the present embodiment, the portable electronic device 100 is not fully operational for communication with the wireless network 200 without the SIM card 126. By inserting the SIM card/RUIM 126 into the SIM/RUIM interface 128, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM card/RUIM 126 includes a processor and memory for storing information. Once the SIM card/RUIM 126 is inserted into the SIM/RUIM interface 128, it is coupled to the main processor 102. In order to identify the subscriber, the SIM card/RUIM 126 can include some user parameters such as an International Mobile Subscriber Identity (IMSI). An advantage of using the SIM card/RUIM 126 is that a subscriber is not necessarily bound by any single physical portable electronic device. The SIM card/RUIM 126 may store additional subscriber information for a portable electronic device as well, including datebook (or calendar) information and recent call information. Alternatively, user identification information can also be programmed into the flash memory 108.

The portable electronic device 100 is a battery-powered device and includes a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the portable electronic device 100. Although current technology makes use of a battery, future technologies such as micro fuel cells may provide the power to the portable electronic device 100.

The portable electronic device 100 also includes an operating system 134 and software components 136 to 146 which are described in more detail below. The operating system 134 and the software components 136 to 146 that are executed by the main processor 102 are typically stored in a persistent store such as the flash memory 108, which may alternatively be a read-only memory (ROM) or similar storage element (not shown). Those skilled in the art will appreciate that portions of the operating system 134 and the software components 136 to 146, such as specific device applications, or parts thereof, may be temporarily loaded into a volatile store such as the RAM 106. Other software components can also be included, as is well known to those skilled in the art.

The subset of software applications 136 that control basic device operations, including data and voice communication applications are installed on the portable electronic device 100 during its manufacture. Other software applications include a message application 138 that can be any suitable software program that allows a user of the portable electronic device 100 to send and receive electronic messages. Various alternatives exist for the message application 138 as is well known to those skilled in the art. Messages that have been sent or received by the user are typically stored in the flash memory 108 of the portable electronic device 100 or some other suitable storage element in the portable electronic device 100. In at least some embodiments, some of the sent and received messages may be stored remotely from the device 100 such as in a data store of an associated host system that the portable electronic device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the portable electronic device 100 is turned off or loses power.

The PIM 142 includes functionality for organizing and managing data items of interest to the user, such as, but not limited to, e-mail, contacts, calendar events, voice mails, appointments, and task items. PIM applications include, for example, calendar, address book, tasks and memo applications. The PIM applications have the ability to send and receive data items via the wireless network 200. PIM data items may be seamlessly integrated, synchronized, and updated via the wireless network 200 with the portable electronic device subscriber's corresponding data items stored and/or associated with a host computer system. This functionality creates a mirrored host computer on the portable electronic device 100 with respect to such items. This can be particularly advantageous when the host computer system is the portable electronic device subscriber's office computer system.

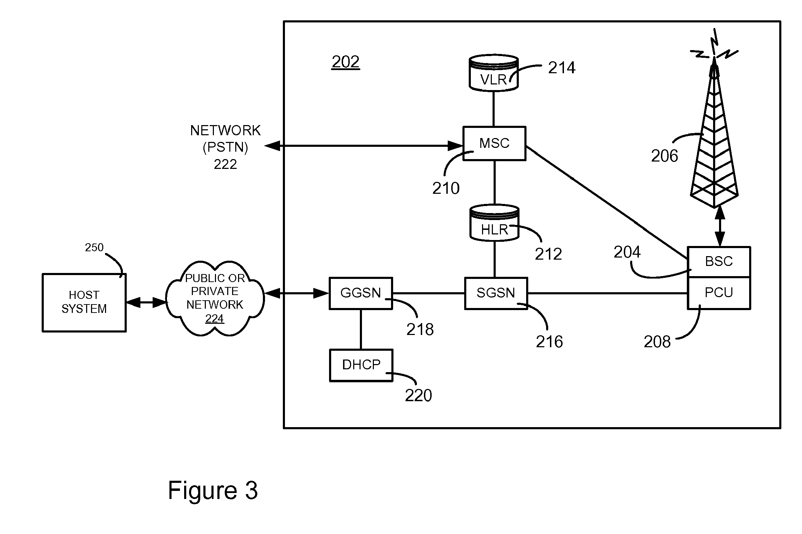

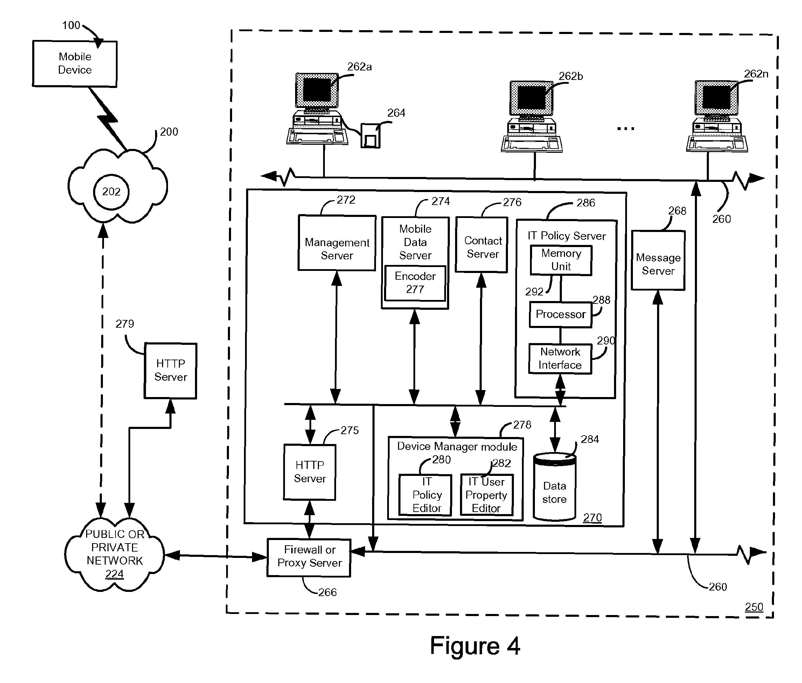

The portable electronic device 100 also includes a connect module 144, and an information technology (IT) policy module 146. The connect module 144 implements the communication protocols that are required for the portable electronic device 100 to communicate with the wireless infrastructure and any host system, such as an enterprise system, that the portable electronic device 100 is authorized to interface with. Examples of a wireless infrastructure and an enterprise system are given in Figures 3 and 4, which are described in more detail below.

The connect module 144 includes a set of APIs that can be integrated with the portable electronic device 100 to allow the portable electronic device 100 to use any number of services associated with the enterprise system. The connect module 144 allows the portable electronic device 100 to establish an end-to-end secure, authenticated communication pipe with the host system. A subset of applications for which access is provided by the connect module 144 can be used to pass IT policy commands from the host system to the portable electronic device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be installed on the portable electronic device 100. These software applications can be third party applications, which are added after the manufacture of the portable electronic device 100. Examples of third party applications include games, calculators, utilities, etc.

The additional applications can be loaded onto the portable electronic device 100 through at least one of the wireless network 200, the auxiliary I/O subsystem 112, the data port 114, the short-range communications subsystem 122, or any other suitable device subsystem 124. This flexibility in application installation increases the functionality of the portable electronic device 100 and may provide enhanced on-device functions, communication-related functions, or both. For example, secure communication applications may enable electronic commerce functions and other such financial transactions to be performed using the portable electronic device 100.

The data port 114 enables a subscriber to set preferences through an external device or software application and extends the capabilities of the portable electronic device 100 by providing for information or software downloads to the portable electronic device 100 other than through a wireless communication network. The alternate download path may, for example, be used to load an encryption key onto the portable electronic device 100 through a direct and thus reliable and trusted connection to provide secure device communication.

The data port 114 can be any suitable port that enables data communication between the portable electronic device 100 and another computing device. The data port 114 can be a serial or a parallel port. In some instances, the data port 114 can be a USB port that includes data lines for data transfer and a supply line that can provide a charging current to charge the battery 130 of the portable electronic device 100.

The short-range communications subsystem 122 provides for communication between the portable electronic device 100 and different systems or devices, without the use of the wireless network 200. For example, the subsystem 122 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, Web page download, or any other information is processed by the communication subsystem 104 and input to the main processor 102. The main processor 102 will then process the received signal for output to the display 110 or alternatively to the auxiliary I/O subsystem 112. A subscriber may also compose data items, such as e-mail messages, for example, using the keyboard 116 in conjunction with the display 110 and possibly the auxiliary I/O subsystem 112. The auxiliary subsystem 112 may include devices such as: a touch screen, mouse, track ball, infrared fingerprint detector, or a roller wheel with dynamic button pressing capability. The keyboard 116 is preferably an alphanumeric keyboard and/or telephone-type keypad. However, other types of keyboards may also be used. A composed item may be transmitted over the wireless network 200 through the communication subsystem 104.

For voice communications, the overall operation of the portable electronic device 100 is substantially similar, except that the received signals are output to the speaker 118, and signals for transmission are generated by the microphone 120. Alternative voice or audio I/O subsystems, such as a voice message recording subsystem, can also be implemented on the portable electronic device 100. Although voice or audio signal output is accomplished primarily through the speaker 118, the display 110 can also be used to provide additional information such as the identity of a calling party, duration of a voice call, or other voice call related information.

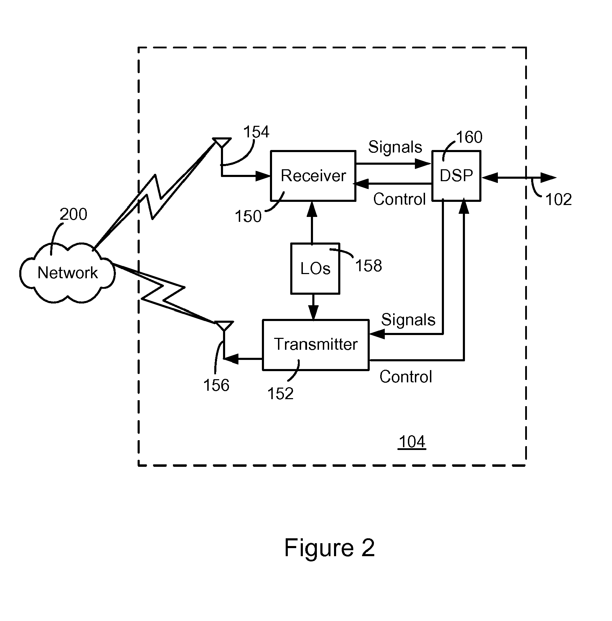

Referring now to Figure 2, an exemplary block diagram of the communication subsystem component 104 is shown. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the portable electronic device 100 is intended to operate. Thus, it should be understood that the design illustrated in Figure 2 serves only as one example.

Signals received by the antenna 154 through the wireless network 200 are input to the receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 may be adaptively controlled through automatic gain control algorithms implemented in the DSP 160.

The wireless link between the portable electronic device 100 and the wireless network 200 can contain one or more different channels, typically different RF channels, and associated protocols used between the portable electronic device 100 and the wireless network 200. An RF channel is a limited resource that should be conserved, typically due to limits in overall bandwidth and limited battery power of the portable electronic device 100.

When the portable electronic device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods.

Referring now to Figure 3, a block diagram of an exemplary implementation of a node 202 of the wireless network 200 is shown. In practice, the wireless network 200 comprises one or more nodes 202. In conjunction with the connect module 144, the portable electronic device 100 can communicate with the node 202 within the wireless network 200. In the exemplary implementation of Figure 3, the node 202 is configured in accordance with General Packet Radio Service (GPRS) and Global Systems for Mobile (GSM) technologies. The node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through the network 200.

In a GSM network, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to a public or private network (Internet) 224 (also referred to herein generally as a shared network infrastructure) represents the data path for GPRS capable portable electronic devices. In a GSM network extended with GPRS capabilities, the BSC 204 also contains the Packet Control Unit (PCU) 208 that connects to the SGSN 216 to control segmentation, radio channel allocation and to satisfy packet switched requirements. To track the location of the portable electronic device 100 and availability for both circuit switched and packet switched management, the HLR 212 is shared between the MSC 210 and the SGSN 216. Access to the VLR 214 is controlled by the MSC 210.

The station 206 is a fixed transceiver station and together with the BSC 204 form fixed transceiver equipment. The fixed transceiver equipment provides wireless network coverage for a particular coverage area commonly referred to as a "cell". The fixed transceiver equipment transmits communication signals to and receives communication signals from portable electronic devices within its cell via the station 206. The fixed transceiver equipment normally performs such functions as modulation and possibly encoding and/or encryption of signals to be transmitted to the portable electronic device 100 in accordance with particular, usually predetermined, communication protocols and parameters, under control of its controller. The fixed transceiver equipment similarly demodulates and possibly decodes and decrypts, if necessary, any communication signals received from the portable electronic device 100 within its cell. Communication protocols and parameters may vary between different nodes. For example, one node may employ a different modulation scheme and operate at different frequencies than other nodes.

For all portable electronic devices 100 registered with a specific network, permanent configuration data such as a user profile is stored in the HLR 212. The HLR 212 also contains location information for each registered portable electronic device and can be queried to determine the current location of a portable electronic device. The MSC 210 is responsible for a group of location areas and stores the data of the portable electronic devices currently in its area of responsibility in the VLR 214. Further, the VLR 214 also contains information on portable electronic devices that are visiting other networks. The information in the VLR 214 includes part of the permanent portable electronic device data transmitted from the HLR 212 to the VLR 214 for faster access. By moving additional information from a remote HLR 212 node to the VLR 214, the amount of traffic between these nodes can be reduced so that voice and data services can be provided with faster response times and at the same time requiring less use of computing resources.

The SGSN 216 and the GGSN 218 are elements added for GPRS support; namely packet switched data support, within GSM. The SGSN 216 and the MSC 210 have similar responsibilities within the wireless network 200 by keeping track of the location of each portable electronic device 100. The SGSN 216 also performs security functions and access control for data traffic on the wireless network 200. The GGSN 218 provides internetworking connections with external packet switched networks and connects to one or more SGSN's 216 via an Internet Protocol (IP) backbone network operated within the network 200. During normal operations, a given portable electronic device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server 220 connected to the GGSN 218. There are many mechanisms for dynamic IP assignment, including using a combination of a Remote Authentication Dial-In User Service (RADIUS) server and a DHCP server. Once the GPRS Attach is complete, a logical connection is established from a portable electronic device 100, through the PCU 208, and the SGSN 216 to an Access Point Node (APN) within the GGSN 218. The APN represents a logical end of an IP tunnel that can either access direct Internet compatible services or private network connections. The APN also represents a security mechanism for the network 200, insofar as each portable electronic device 100 must be assigned to one or more APNs and portable electronic devices 100 cannot exchange data without first performing a GPRS Attach to an APN that it has been authorized to use. The APN may be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, the network 200 will run an idle timer for each PDP Context to determine if there is a lack of activity. When a portable electronic device 100 is not using its PDP Context, the PDP Context can be de-allocated and the IP address returned to the IP address pool managed by the DHCP server 220.

Referring now to Figure 4, shown therein is a block diagram illustrating components of an exemplary configuration of a host system 250 that the portable electronic device 100 can communicate with in conjunction with the connect module 144. The host system 250 will typically be a corporate enterprise or other local area network (LAN), but may also be a home office computer or some other private system, for example, in variant implementations. In this example shown in Figure 4, the host system 250 is depicted as a LAN of an organization to which a user of the portable electronic device 100 belongs. Typically, a plurality of portable electronic devices can communicate wirelessly with the host system 250 through one or more nodes 202 of the wireless network 200.

The host system 250 comprises a number of network components connected to each other by a network 260. For instance, a user's desktop computer 262a with an accompanying cradle 264 for the user's portable electronic device 100 is situated on a LAN connection. The cradle 264 for the portable electronic device 100 can be coupled to the computer 262a by a serial or a Universal Serial Bus (USB) connection, for example. Other user computers 262b-262n are also situated on the network 260, and each may or may not be equipped with an accompanying cradle 264. The cradle 264 facilitates the loading of information (e.g. PIM data, private symmetric encryption keys to facilitate secure communications) from the user computer 262a to the portable electronic device 100, and may be particularly useful for bulk information updates often performed in initializing the portable electronic device 100 for use. The information downloaded to the portable electronic device 100 may include certificates used in the exchange of messages.

It will be understood by persons skilled in the art that the user computers 262a-262n will typically also be connected to other peripheral devices, such as printers, etc. which are not explicitly shown in Figure 4. Furthermore, only a subset of network components of the host system 250 are shown in Figure 4 for ease of exposition, and it will be understood by persons skilled in the art that the host system 250 will comprise additional components that are not explicitly shown in Figure 4 for this exemplary configuration. More generally, the host system 250 may represent a smaller part of a larger network (not shown) of the organization, and may comprise different components and/or be arranged in different topologies than that shown in the exemplary embodiment of Figure 4.

To facilitate the operation of the portable electronic device 100 and the wireless communication of messages and message-related data between the portable electronic device 100 and components of the host system 250, a number of wireless communication support components 270 can be provided. In some implementations, the wireless communication support components 270 can include a management server 272, a mobile data server (MDS) 274, a web server, such as Hypertext Transfer Protocol (HTTP) server 275, a contact server 276, and a device manager module 278. HTTP servers can also be located outside the enterprise system, as indicated by the HTTP server 275 attached to the network 224. The device manager module 278 includes an IT Policy editor 280 and an IT user property editor 282, as well as other software components for allowing an IT administrator to configure the portable electronic devices 100. In an alternative embodiment, there may be one editor that provides the functionality of both the IT policy editor 280 and the IT user property editor 282. The support components 270 also include a data store 284, and an IT policy server 286. The IT policy server 286 includes a processor 288, a network interface 290 and a memory unit 292. The processor 288 controls the operation of the IT policy server 286 and executes functions related to the standardized IT policy as described below. The network interface 290 allows the IT policy server 286 to communicate with the various components of the host system 250 and the portable electronic devices 100. The memory unit 292 can store functions used in implementing the IT policy as well as related data. Those skilled in the art know how to implement these various components. Other components may also be included as is well known to those skilled in the art. Further, in some implementations, the data store 284 can be part of any one of the servers.

In this exemplary embodiment, the portable electronic device 100 communicates with the host system 250 through node 202 of the wireless network 200 and a shared network infrastructure 224 such as a service provider network or the public Internet. Access to the host system 250 may be provided through one or more routers (not shown), and computing devices of the host system 250 may operate from behind a firewall or proxy server 266. The proxy server 266 provides a secure node and a wireless internet gateway for the host system 250. The proxy server 266 intelligently routes data to the correct destination server within the host system 250.

In some implementations, the host system 250 can include a wireless VPN router (not shown) to facilitate data exchange between the host system 250 and the portable electronic device 100. The wireless VPN router allows a VPN connection to be established directly through a specific wireless network to the portable electronic device 100. The wireless VPN router can be used with the Internet Protocol (IP) Version 6 (IPV6) and IP-based wireless networks. This protocol can provide enough IP addresses so that each portable electronic device has a dedicated IP address, making it possible to push information to a portable electronic device at any time. An advantage of using a wireless VPN router is that it can be an off-the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the portable electronic device 100 in this alternative implementation.

Messages intended for a user of the portable electronic device 100 are initially received by a message server 268 of the host system 250. Such messages may originate from any number of sources. For instance, a message may have been sent by a sender from the computer 262b within the host system 250, from a different portable electronic device (not shown) connected to the wireless network 200 or a different wireless network, or from a different computing device, or other device capable of sending messages, via the shared network infrastructure 224, possibly through an application service provider (ASP) or Internet service provider (ISP), for example.

The message server 268 typically acts as the primary interface for the exchange of messages, particularly e-mail messages, within the organization and over the shared network infrastructure 224. Each user in the organization that has been set up to send and receive messages is typically associated with a user account managed by the message server 268. Some exemplary implementations of the message server 268 include a Microsoft Exchange^{™} server, a Lotus Domino^{™}server, a Novell Groupwise^{™}server, or another suitable mail server installed in a corporate environment. In some implementations, the host system 250 may comprise multiple message servers 268. The message server provides additional functions including calendaring, contacts and tasks and supports data storage.

When messages are received by the message server 268, they are typically stored in a data store associated with the message server 268. In at least some embodiments, the data store may be a separate hardware unit, such as data store 284, that the message server 268 communicates with. Messages can be subsequently retrieved and delivered to users by accessing the message server 268. For instance, an e-mail client application operating on a user's computer 262a may request the e-mail messages associated with that user's account stored on the data store associated with the message server 268. These messages are then retrieved from the data store and stored locally on the computer 262a. The data store associated with the message server 268 can store copies of each message that is locally stored on the portable electronic device 100. Alternatively, the data store associated with the message server 268 can store all of the messages for the user of the portable electronic device 100 and only a smaller number of messages can be stored on the portable electronic device 100 to conserve memory. For instance, the most recent messages (i.e. those received in the past two to three months for example) can be stored on the portable electronic device 100.

When operating the portable electronic device 100, the user may wish to have e-mail messages retrieved for delivery to the portable electronic device 100. The message application 138 operating on the portable electronic device 100 may also request messages associated with the user's account from the message server 268. The message application 138 may be configured (either by the user or by an administrator, possibly in accordance with an organization's IT policy) to make this request at the direction of the user, at some pre-defined time interval, or upon the occurrence of some pre-defined event. In some implementations, the portable electronic device 100 is assigned its own e-mail address, and messages addressed specifically to the portable electronic device 100 are automatically redirected to the portable electronic device 100 as they are received by the message server 268.

The management server 272 can be used to specifically provide support for the management of, for example, messages, such as e-mail messages, that are to be handled by portable electronic devices. Generally, while messages are still stored on the message server 268, the management server 272 can be used to control when, if, and how messages are sent to the portable electronic device 100. The management server 272 also facilitates the handling of messages composed on the portable electronic device 100, which are sent to the message server 268 for subsequent delivery.

For example, the management server 272 may monitor the user's "mailbox" (e.g. the message store associated with the user's account on the message server 268) for new e-mail messages, and apply user-definable filters to new messages to determine if and how the messages are relayed to the user's portable electronic device 100. The management server 272 may also, through an encoder 273, compress messages, using any suitable compression technology (e.g. YK compression, and other known techniques) and encrypt messages (e.g. using an encryption technique such as Data Encryption Standard (DES), Triple DES, or Advanced Encryption Standard (AES)), and push them to the portable electronic device 100 via the shared network infrastructure 224 and the wireless network 200. The management server 272 may also receive messages composed on the portable electronic device 100 (e.g. encrypted using Triple DES), decrypt and decompress the composed messages, re-format the composed messages if desired so that they will appear to have originated from the user's computer 262a, and re-route the composed messages to the message server 268 for delivery.

Certain properties or restrictions associated with messages that are to be sent from and/or received by the portable electronic device 100 can be defined (e.g. by an administrator in accordance with IT policy) and enforced by the management server 272. These may include whether the portable electronic device 100 may receive encrypted and/or signed messages, minimum encryption key sizes, whether outgoing messages must be encrypted and/or signed, and whether copies of all secure messages sent from the portable electronic device 100 are to be sent to a pre-defined copy address, for example.

The management server 272 may also be adapted to provide other control functions, such as only pushing certain message information or pre-defined portions (e.g. "blocks") of a message stored on the message server 268 to the portable electronic device 100. For example, in some cases, when a message is initially retrieved by the portable electronic device 100 from the message server 268, the management server 272 may push only the first part of a message to the portable electronic device 100, with the part being of a pre-defined size (e.g. 2 KB). The user can then request that more of the message be delivered in similar-sized blocks by the management server 272 to the portable electronic device 100, possibly up to a maximum pre-defined message size. Accordingly, the management server 272 facilitates better control over the type of data and the amount of data that is communicated to the portable electronic device 100, and can help to minimize potential waste of bandwidth or other resources.

The MDS 274 encompasses any other server that stores information that is relevant to the corporation. The mobile data server 274 may include, but is not limited to, databases, online data document repositories, customer relationship management (CRM) systems, or enterprise resource planning (ERP) applications. The MDS 274 can also connect to the Internet or other public network, through HTTP server 275 or other suitable web server such as an File Transfer Protocol (FTP) server, to retrieve HTTP webpages and other data. Requests for webpages are typically routed through MDS 274 and then to HTTP server 275, through suitable firewalls and other protective mechanisms. The web server then retrieves the webpage over the Internet, and returns it to MDS 274. As described above in relation to management server 272, MDS 274 is typically provided, or associated, with an encoder 277 that permits retrieved data, such as retrieved webpages, to be compressed, using any suitable compression technology (e.g. YK compression, and other known techniques), and encrypted (e.g. using an encryption technique such as DES, Triple DES, or AES), and then pushed to the portable electronic device 100 via the shared network infrastructure 224 and the wireless network 200.

The contact server 276 can provide information for a list of contacts for the user in a similar fashion as the address book on the portable electronic device 100. Accordingly, for a given contact, the contact server 276 can include the name, phone number, work address and e-mail address of the contact, among other information. The contact server 276 can also provide a global address list that contains the contact information for all of the contacts associated with the host system 250.

It will be understood by persons skilled in the art that the management server 272, the MDS 274, the HTTP server 275, the contact server 276, the device manager module 278, the data store 284 and the IT policy server 286 do not need to be implemented on separate physical servers within the host system 250. For example, some or all of the functions associated with the management server 272 may be integrated with the message server 268, or some other server in the host system 250. Alternatively, the host system 250 may comprise multiple management servers 272, particularly in variant implementations where a large number of portable electronic devices need to be supported.

The device manager module 278 provides an IT administrator with a graphical user interface with which the IT administrator interacts to configure various settings for the portable electronic devices 100. As mentioned, the IT administrator can use IT policy rules to define behaviors of certain applications on the portable electronic device 100 that are permitted such as phone, web browser or Instant Messenger use. The IT policy rules can also be used to set specific values for configuration settings that an organization requires on the portable electronic devices 100 such as auto signature text, WLAN/VoIP/VPN configuration, security requirements (e.g. encryption algorithms, password rules, etc.), specifying themes or applications that are allowed to run on the portable electronic device 100, and the like.

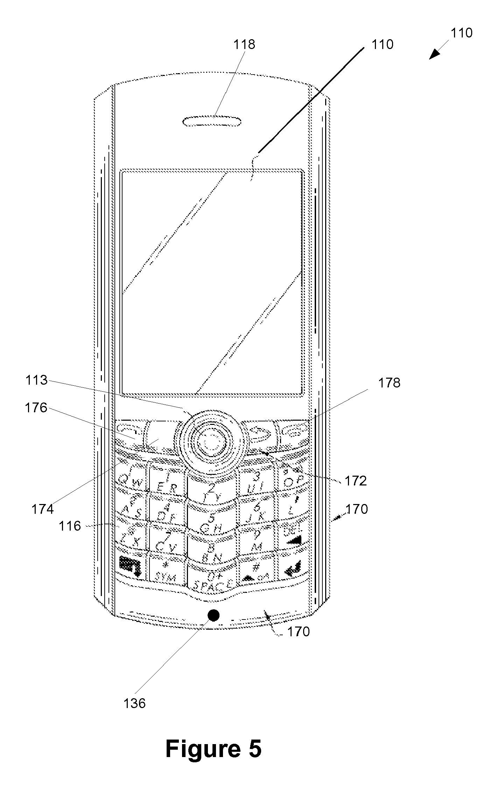

Reference is now made to Figure 5 which shows an exemplary portable electronic device 100 in accordance with an embodiment. It will be appreciated that the present application is not limited to the portable electronic device 100 shown in Figure 5 and many other portable electronic devices are possible as indicated hereinabove. The portable electronic device 100 includes a housing 170 that frames the LCD display 110, the speaker 118, the trackball 113, the keyboard 116, and the microphone 136. The trackball 113 can be rolled within a socket for user-input and can be inwardly depressed as a means for providing additional user-input. The keyboard 116 includes input keys such as an exit key 172, a menu key 174, an initiate call key 176 and an end call key 178. The housing 170 is made from a suitable material as will occur to those skilled in the art and can be stored, for example, in a holster (not shown) that includes an attachment for attaching to a user's belt.

A method of determining time periods for a meeting according to an embodiment includes receiving an indication of at least two invitees for the meeting, obtaining calendar data for the invitees, determining free time periods for the invitees based on the calendar data, and creating a list of the free time periods for the invitees.

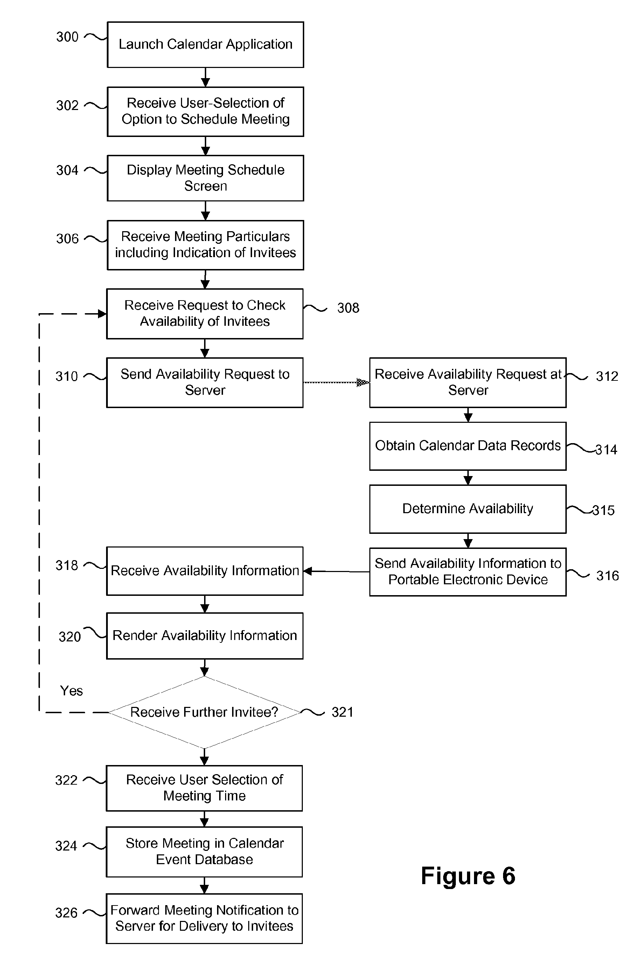

Referring now to Figure 6, there is shown a simplified flowchart depicting steps in a method of determining time periods for a meeting according to one embodiment. It will be appreciated that each of the steps of Figure 6 is carried out by routines or subroutines of the software executed by the main processor 102 and a processor or processors at the host system 250. Coding of software for carrying out such steps is well within the scope of a person of ordinary skill in the art having regard to the present description.

The calendar application is executed by the processor 102 (step 300). A calendar view is displayed on the LCD display 110 of the portable electronic device 100, such as a default calendar view showing calendar event records that have a start and/or an end time that falls within a set of time constraints that depend on the default calendar view. The calendar event records that fall within the time constraints are retrieved and displayed in the calendar Graphical User Interface (GUI), also referred to herein as a calendar view.

From the calendar view, the user of the portable electronic device 100 selects an option for a new meeting request which is received at the processor 102 at step 302. In response to receipt of the new meeting request, a meeting scheduling GUI is provided (step 304) via the LCD display 110 for user entry of particulars of the meeting. The meeting particulars are received upon user entry at step 306. The meeting particulars include, for example, an identification of invitees to the meeting, which are entered using the calendar GUI. A request to check the availability of the invitees is received at the processor 102 in response to user selection of an option to check availability at step 308. The request for invitee availability is sent to the host computer system 250 at step 310. Calendar event records that fall within a set of time constraints for each invitee for whom the calendar event records are available is obtained at the host computer system 250, by the management server 272 at step 314. The time constraints can be based on a number of factors including, for example, the current date according to the internal clock or the date displayed in the calendar view upon receipt of user-selection of the option to schedule the meeting. The availability information is determined at step 315 based on the calendar event records retrieved at step 314, sent to the portable electronic device 100 at step 316 and received at the portable electronic device at step 318. The availability information for each of the invitees is rendered in a calendar graphical user interface at step 320 for user selection of a suitable time for the meeting. A further invitee can also be added at step 321, returning the process to step 308. Upon receipt of the user-selected meeting time at step 322, the meeting is stored in the flash memory 108 of the portable electronic device 100 (step 324) and is forwarded on to the host computer system 250, for delivery to the message server 268 for storage in a respective calendar database in the data store 270, for example. A meeting notification is sent by way of electronic mail, to the host computer system 250 for delivery via the message server 268 to each of the included invitees at step 326.

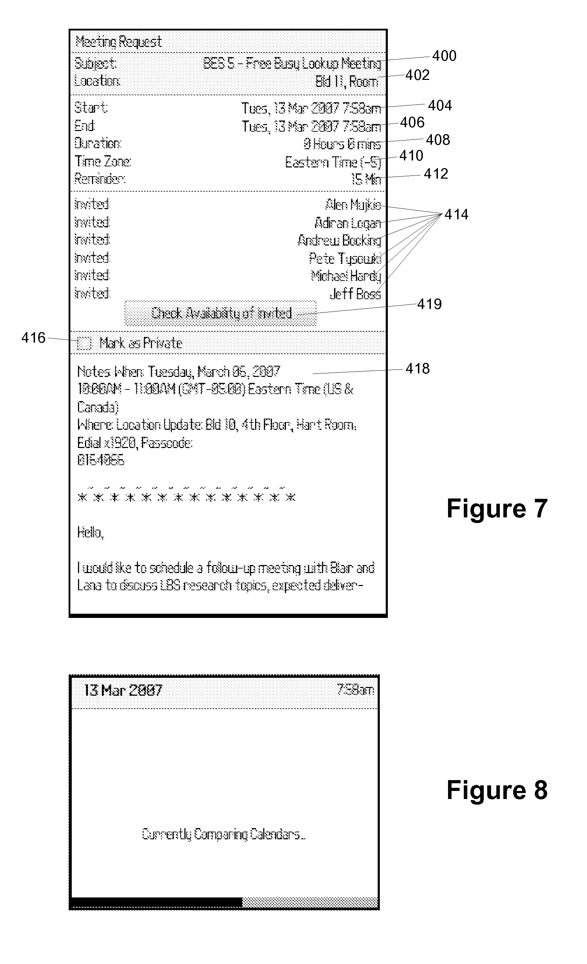

Continued reference is made to Figure 6 and to Figures 7 to 16 to describe an example of a method of determining time periods for a meeting. It will be appreciated that the following example is provided for the purpose of illustration only and is not intended to be limiting. Figures 7 to 16 show exemplary screen shots in a method of determining time periods for a meeting. While some exemplary screen shots shown in the Figures differ in size and, in particular, in the vertical dimension, it is possible that certain exemplary screen shots shown are too long to be displayed on the device at any one time. Scrolling using the trackball 113, for example, can permit the user to view all of fields in such exemplary screen shots. Thus, for example, the user may scroll downwardly to view the notes in the exemplary screen shown in Figure 7.

As described hereinabove, the calendar application is executed by the processor, thereby launching the calendar application and providing a calendar GUI via the LCD display 110 (step 300). The calendar application can be launched in response to user-selection of the calendar application from, for example, a menu screen on the LCD display 110 by user rolling of the trackball 113 to highlight a calendar application option, followed by user depression of the trackball 113 to select the application. Alternatively, the calendar application can be launched on start-up of the portable electronic device 100 or can be launched in response to other user input. The calendar GUI can provide any suitable calendar view on the LCD display 110. For example, a default calendar view can be provided, such as a day view of the current day according to an internal clock of the portable electronic device, a week view of the current week, a month view of the current month or an agenda view showing a list of calendar event records. The calendar event records that fall within time constraints based on the calendar view are retrieved and displayed. For example, in the day view, the calendar event records that fall within the displayed day are retrieved and displayed in the calendar GUI.

The option for a new meeting request is then user-selected by, for example, user-selection of a "new" option from a submenu provided upon user-selection of the menu key 174. Many other user-selectable options can be provided in the submenu. In response, the meeting scheduling GUI is provided at step 304 for user-entry of meeting particulars which are received at the processor at step 306. An exemplary meeting scheduling GUI is shown in Figure 7. In the exemplary meeting scheduling GUI of Figure 7, several fields are available for user-entry of meeting particulars, including a "Subject" field 400, a "Location" field 402, a "Start" field 404, an "End" field 406, a "Duration" field 408, a "Time Zone" field 410, a "Reminder" field 412, an "Invited" field 414, a "Mark as Private" field 416 and a "Notes" field 418. It will be appreciated that the "Subject" field 400 is for entry of the subject of the meeting and, in the present example, provides the subject line in any invitation sent to the invitees via electronic mail. The "Location" field 402 is provided for user-entry of the location of the meeting. The "Start" field 404 is provided for user-entry of the start time of the meeting. Alternatively, the user can first determine invitee availability as described further below. The "End" field 406 is provided for user-entry of the end time of the meeting. Again, the user can alternatively determine invitee availability prior to selecting an end time. The "Duration" field 408 is calculated based on the "Start" field 404 and the "End" field 406 data. Alternatively, the "Duration field 408 can be entered and the "End" field 406 determined based on the "Start" field 404 and the "Duration" field 408 data. The "Time Zone" field 410 is provided for user-selection of an appropriate time zone. The "Reminder" field 412 is provided for user-entry of a period of time for a reminder of the meeting. Any suitable reminder can be provided to the user in advance of the meeting by the period of time in the "Reminder" field 412. Thus, in the example of Figure 7, a reminder is set to be provided 15 minutes prior to the meeting. The "Invited" field 414 includes all user-entered invitees to the meeting. In the example of Figure 7, six invitees are included. Any suitable number of invitees can be included, however. Further invitees can be added by, for example, selection of an "Add Attendee" option from a submenu list of options provided upon depression of the menu key 174 from the screen shown in Figure 7. The "Mark as Private" field 416 is provided for user-selection for private calendar event records, the details of which are not shared with others. The "Notes" field 418 is provided for user entry of any notes such as special instructions for meeting preparation, special phone numbers and codes for entry into a teleconference meeting, or any other suitable information.

In the example of Figure 7, certain meeting particulars including the invitees are entered in the appropriate fields using, for example, the trackball 113 and the keyboard 116 at step 306. The invitees can be added by any suitable method such as typing email addresses into the "Invited" field 414, looking up invitees from the contact server 276 using a global address lookup for contacts associated with the host system 250, or by selection of invitees from the contacts listed in the address book stored at the portable electronic device 100. In the present example, six invitees are listed. The first invitee is the meeting organizer. It is contemplated that the meeting organizer can be added manually by the user or can be added automatically upon user selection of the option to schedule a meeting.

Next, the user requests the availability of the invitees at step 308 by user-selection of an option to "Check Availability of Invited" as shown in Figure 7. User-selection of the option to "Check Availability of Invited" is accomplished by, for example, scrolling using the trackball 113 to highlight the "Check Availability of Invited" option 419, followed by inward depression of the trackball 113 to select the option. In response to receipt of the request to check availability of the invitees at the processor 102, a request for invitee availability is sent to the host computer system 250 in the form of a query for calendar event information that falls within a set of time constraints (step 310). The time constraints can be any suitable constraints such as time constraints defining the present day, a day selected by user-entry of a date in the "Start" field 404, the day displayed in the calendar view at the time of user-selection of the option to schedule the meeting, or any other time period. The time period is not limited to a day as any suitable time period can be defined by the constraints including, for example, weeks, months or parts thereof. The portable electronic device 100 then awaits a response from the host computer system 250. Figure 8 shows an exemplary screen shot indicating to the user that the portable electronic device 100 and host computer system 250 are "Currently Comparing Calendars". Thus, the user is informed that the request is received and awaits the response. In the example above, the user is the first invitee listed in the "Invited" field 414.

At step 312 the request to check availability of the invitees is received at the host computer system 250 and the management server 272 retrieves calendar event information for each of the invitees (step 314). The management server 272 retrieves all calendar event records that fall within the set of time constraints for each invitee. Availability information is then determined from the calendar event records retrieved at step 314. According to the present embodiment, the availability information is determined by creating a time-ordered list of calendar event records for all of the invitees and determining start and end times of common free time periods in the time-ordered list. For example, the start times of free time periods are determined based on either the start time of a calendar day or end times of calendar event records while the end times of the free time periods are determined based on either an end time of the calendar day or start times of the next calendar event in the time-ordered list. The common free time periods determined are added to a list of common free time periods (step 315). The availability information in the form of the list of common free time periods determined at step 315 is then sent to the portable electronic device 100 at step 316. In the present example, the calendar event records for each of the invitees are also sent to the portable electronic device 100. It will be appreciated that the calendar event records for the user can be resident on the portable electronic device 100 and can be retrieved from the flash memory 108 of the portable electronic device 100, rather than transmitted from the host computer system 250. The calendar event records are associated with the respective invitee by a unique identifier associated with each invitee. It is also contemplated that rather than sending the calendar event records to the portable electronic device, time information showing availability status of each invitee can be sent.

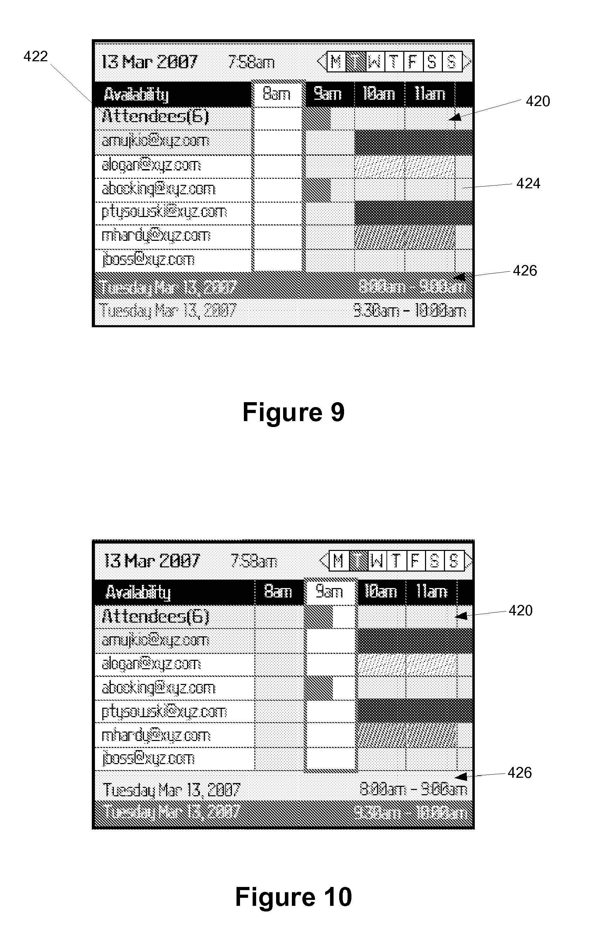

Upon receipt of the availability information along with the calendar event records at the portable electronic device at step 318, the availability information for each user is displayed on the LCD display 110 of the portable electronic device 100 at step 320. Figure 9 is an exemplary screen shot of the LCD display 110 showing availability information for each of the invitees. As shown in Figure 9, a chart 420 is rendered with each invitee listed in an invitee column 422 and availability information for each invitee rendered in availability rows 424. The meeting organizer is listed in the column of invitees, labeled in the present example as "Attendees". For the purpose of the present example, the meeting organizer contact information is rendered with a patterned background to identify the meeting organizer. In the present example, all calendar event records that fall within a one week period from the current day are provided to the portable electronic device 100. Thus, the set of constraints referred to in relation to step 310 include the one week period from the current day. The calendar event records are represented by showing an indication of available and un free time periods in the rows. In the present example, busy time periods, out of office time periods, tentatively scheduled time periods and time periods in which no information is available can all be shown using different representations such as different colours, hashing or shades of gray in the availability rows 424. For example, the organizer, identified as "amujkic@xyz.com", is not available starting at 10:00 AM. Similarly, the invitee identified as "alogan@xyz.com" is not available from 10:00 AM until 12:00 AM. The invitee identified as "abocking@xyz.com" is not available between 9:00 AM and 9:30 AM, the invitee identified as "ptysowski@xyz.com" is not available starting at 10:00 AM, the invitee identified as "mhardy@xyz.com" is not available from 10:00 AM until 12:00 AM, and the invitee identified as "jboss@xyz.com" is shown as available in the chart 420 rendered in Figure 9. Thus, the user of the portable electronic device 100 can readily identify time periods in which all or most invitees are available. To assist the user of the portable electronic device 100, the list of common free time periods 426 determined at step 315 and transmitted to the portable electronic device 100 is rendered. Therefore the free time periods are represented for the invitees in a chart 420 and the list of common free time periods 426 is rendered below the chart 420.

From the exemplary chart 420 in Figure 9, the user can scroll to different time periods by rolling the trackball 113. In Figure 9, for example, the time period from 8:00 AM to 9:00 AM is highlighted. The user can scroll to the next time period by, for example, rolling the trackball 113 from left to right, thereby highlighting the time period from 9:00 AM to 10:00 AM, as shown in Figure 10. The corresponding common free time periods are also highlighted in the list of common free time periods 426 below the chart 420. Thus, in Figure 9, the time period from 8:00 AM to 9:00 AM is highlighted in the chart 420. Since all invitees are available in this time period, the common free time is listed below the chart 420 and is highlighted, as shown in Figure 9. Scrolling to highlight the time period from 9:00 AM to 10:00 AM results in highlighting the corresponding common free time period in the list of common free time periods 426 below the chart 420 as shown in Figure 10. In the present example, however, the invitee identified as "abocking@xyz.com" is busy between 9:00 AM and 9:30 AM. Thus, the common free time period listed below the chart 426 is indicated as being from 9:30 AM to 10:00 AM. It will be appreciated that there is no common free time period between 10:00 AM and 11:00 AM and thus, there is no corresponding common free time period highlighted below the chart 420 upon scrolling to the time period between 10:00 AM and 11:00 AM in the chart 420. It is contemplated that a further request can be sent to the host system 250 if a user attempts to scroll to a different time period that does not fall within the time constraints described above with reference to step 310.

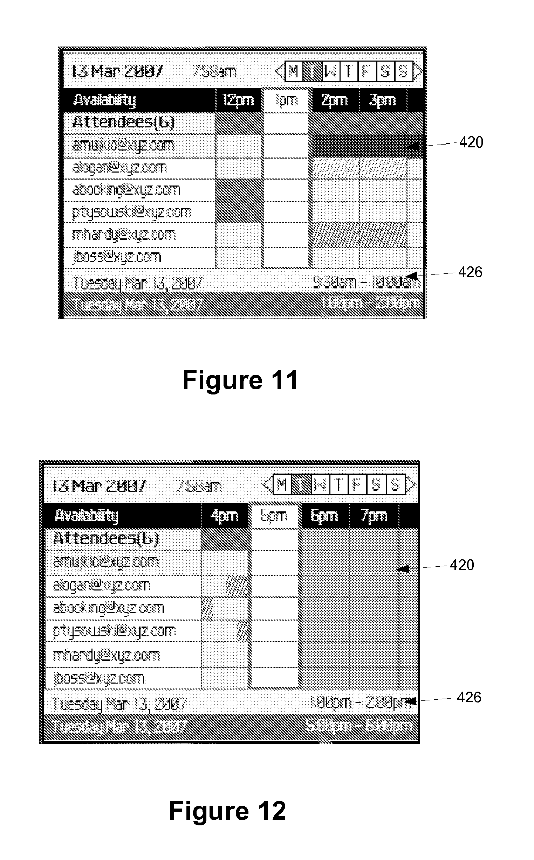

It will be appreciated that the information displayed at any one time is limited by the size of the LCD display 110 of the portable electronic device 100. Thus, only a portion of the availability information received at the portable electronic device 100 is displayed at any one time. Further availability information is displayed by user-scrolling using the trackball 113, for example. Figure 11 is an exemplary screen shot of the LCD display 110 showing further availability information for each of the invitees, displayed as a result of user-scrolling of the trackball 113 from left to right. Again, a time period is highlighted in the chart 420 as the user scrolls to that time period and a corresponding common free time period is highlighted in the list of common free time periods 426 below the chart 420. In the exemplary screen shot of Figure 11, the 1:00 PM to 2:00 PM time period is highlighted in the chart 420 and, since this is a common free time period, the corresponding time slot is listed and highlighted in the list of common free time periods 426 below the chart 420.

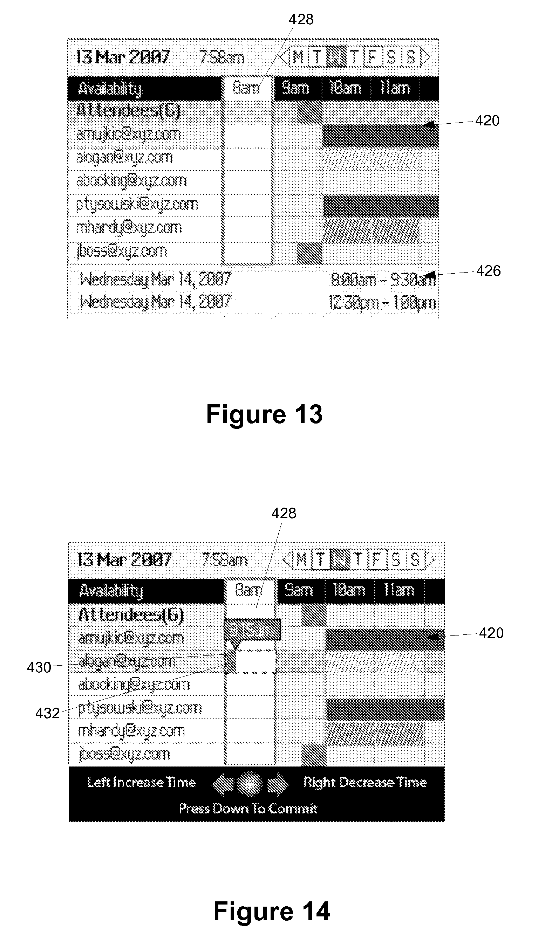

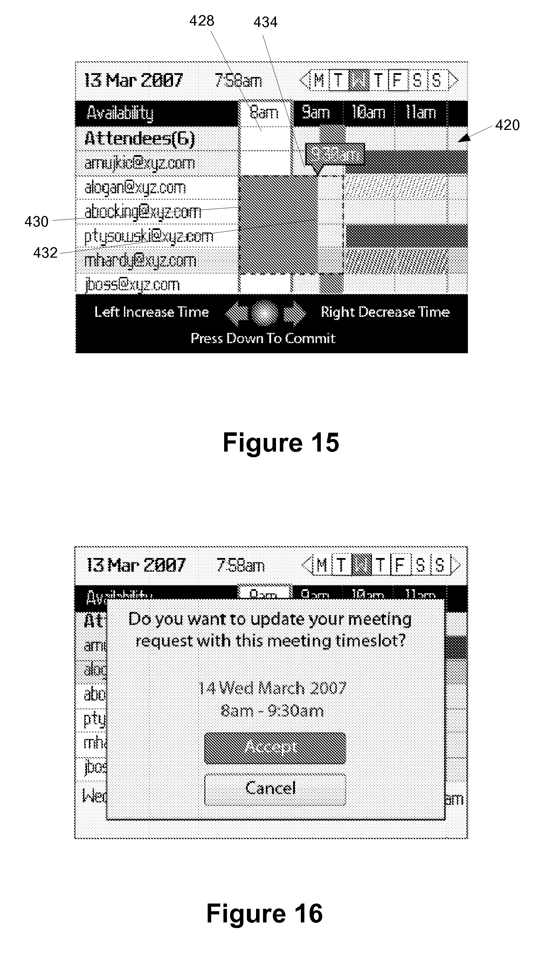

Figures 12 and 13 are additional exemplary screen shots of the LCD display 110 showing further availability information for each of the invitees, displayed as a result of user-scrolling of the trackball 113 from left to right. Figure 12 shows further time periods for the same date, 13 Mar, 2007, as Figures 9, 10 and 11. Figure 13 shows further time periods the following day, 14 Mar, 2007. Thus, a user can scroll to a different day to identify a suitable time slot in which to schedule a meeting. In Figure 13, the time slot from 8:00 AM to 9:30 AM is common free time for all invitees and is therefore listed in the list of common free time periods 426. To schedule a meeting during this common free time, the time slot that includes the starting time is selected. Thus, to select a starting time of 8:00 AM, the 8:00 AM to 9:00 AM time period 428 is highlighted as shown in Figure 13 and selected by, for example, depression of the trackball 113. With the 8:00 AM to 9:00 AM time period 428 selected, the a start time 430 is selected by scrolling the trackball 113 to the desired start time. Since the 8:00 AM to 9:00 AM time period 428 is selected, scrolling of the trackball 113 results in scrolling within this time period to select the start time 430. Again, the start time 430 can be selected by, for example, user depression of the trackball 113. After the start time 430 is selected, the portable electronic device 100 awaits selection of an end time 432 which is selected by user-scrolling to the right to increase the time and to the left to decrease the time followed by user-depression of the trackball 113. Upon selection of the start time 430, an animated border in the form of a dashed border appears around the time period covered by the meeting time. Thus, in the exemplary screen shot of Figure 14, the 8:00 AM to 9:00 AM time period 428 shows an animated border. Further, the end time 432 is displayed in a bubble in the window until selected by the user. As shown in Figure 14, the user-selected start time 430 is 8:00 AM and the end time 432 (not yet selected) is shown as 8:15 AM. The user then scrolls to the right using the trackball 113 to increase the time, as shown in the exemplary screen shot of Figure 15. The user can scroll into another time period, which in the present example includes the 9:00 AM to 10:00 AM time period 434 as shown in Figure 15. As shown, the user can also scroll upwardly or downwardly on the screen to include or exclude invitees. For example, in the exemplary screen shot of Figure 14, only the invitee "alogan@xyz.com" is included as the time next to "alogan@xyz.com" is selected. In exemplary Figure 15, however, the time next to four invitees, including "alogan@xyz.com", "abocking@xyz.com", "ptysowski@xyz.com", and "mhardy@xyz.com", is selected and therefore these four invitees are included. Thus, from exemplary Figure 14, the meeting organizer scrolls to the right to the desired time and downwardly to include the desired invitees as shown in Figure 15. Only the included invitees are sent invitations to the meeting when the meeting time is selected. Thus, in the present example, "jboss@xyz.com" is not included as an invitee. When the desired end time is reached, the end time 432 is entered by, for example, depression of the trackball 113. Upon receipt of the entered end time, a confirmation window is provided for user-confirmation to update the meeting with the selected beginning and end times. Figure 16 is an exemplary screen shot for user confirmation to update the meeting request with the selected start time of 8:00 AM and end time of 9:30 AM. Alternatively, the user can select a cancel option to return to the screen showing invitee availability for selection of a new start time 430 and end time 432.

In the present example, no further invitees are added (step 321) and the process proceeds to step 322.

Upon receipt of user-confirmation of the selected start time 430 and end time 432 (step 322), the meeting request is updated with the selected start time 430 in the "Start" field 404, an end time 432 in the "End" field 406 and a resulting duration in the "Duration" field and stored locally in the calendar event database at the portable electronic device 100. The meeting request is also forwarded to the host computer system 250 for storage in the respective calendar database in the data store 270 (step 324). The meeting invitation is also forwarded to the host computer system 250 for delivery to each of the included invitees at step 326. The meeting invitation is sent via electronic mail for receipt at respective electronic devices of the included invitees. It is possible that all invitees added at step 306 are included as invitees.

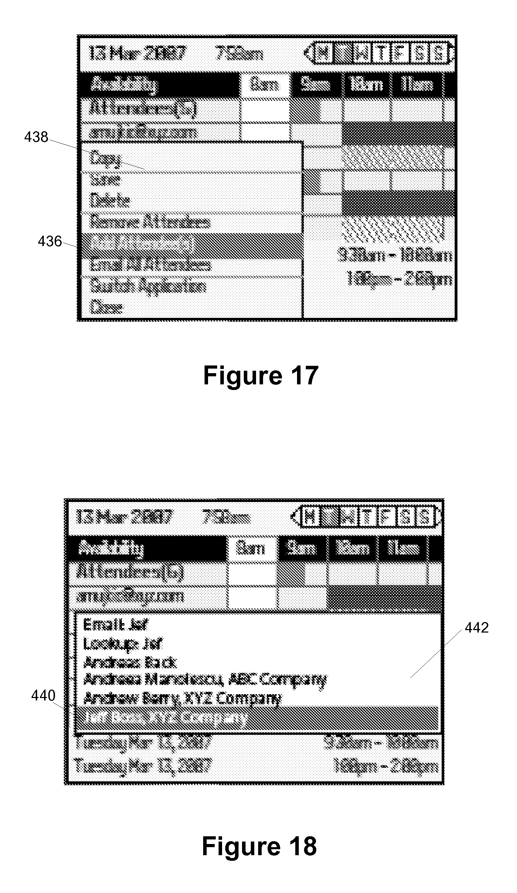

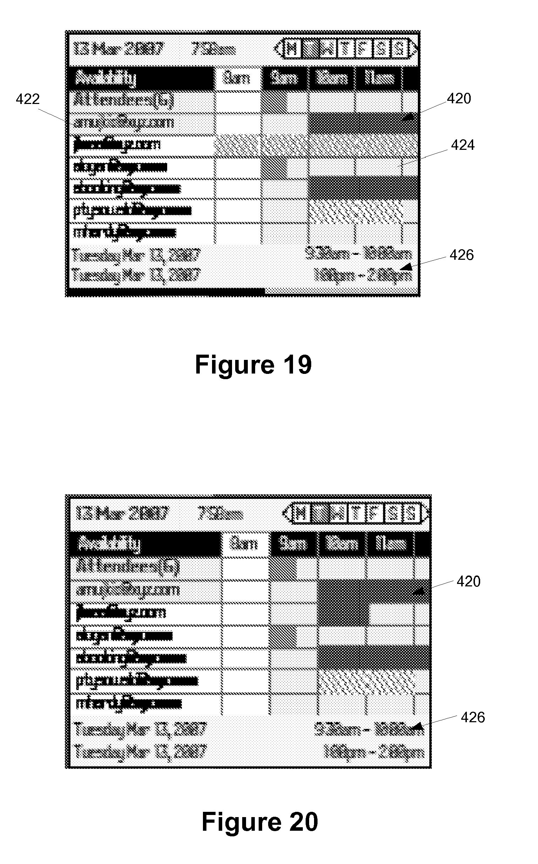

Reference is now made to Figures 6 and 17 to 20 to describe a further a method of determining time periods for a meeting according to another example. It will be appreciated that the following example is provided for the purpose of illustration only and is not intended to be limiting. Figures 17 to 20 show exemplary screen shots in a method of determining time periods for a meeting. Figure 17 shows an exemplary screen shot after rendering the availability information to the user at step 320. In the present example, 5 invitees are initially added by the user when entering the meeting particulars and thus the availability information received at the portable electronic device 100 includes availability information for the 5 invitees. After display of the availability information at step 320, the user can add further invitees. For example, the user can select an option to add a further invitee 436 from a submenu list of options 438 provided upon user-selection of the menu key 174. After selection of the option to add a further invitee 436 ("Add Attendee"), an indication of the invitee is provided by, for example, user-selection of a contact 440 from a list of contacts 442 from the address book stored at the portable electronic device 100, as shown in Figure 18. Alternatively, the user can add a further invitee by, for example, selection using a global address lookup for contacts associated with the host system 250 or by entering an email address of the invitee. In the present example, the addition of the further invitee from the screen displaying availability information of the invitees results in the addition of the invitee to the invitee column 422 in the chart 420 with time indicated as no information available, as shown in Figure 19. The addition of the further invitee also acts as a request to check availability of the further invitee, which is received upon user-selection of the further invitee (step 308). Thus, an availability request for the further invitee is sent to the host computer system 250 in the form of a query for calendar event information that falls within the set of time constraints (step 310). The request to check availability of the further invitee is received at the host computer system 250 (step 312) and the management server 272 retrieves calendar event information for the further invitee (step 314). The calendar event records for the further invitee are associated with the further invitee by a unique identifier. At step 312 the request to check availability of the invitees is received at the host computer system 250 and the management server 272 retrieves calendar event information for each of the invitees (step 314). The management server 272 retrieves all calendar event records that fall within the set of time constraints for each invitee. Availability information is then determined from the calendar event records retrieved at step 314. The availability information is again determined by creating a time-ordered list of calendar event records for all of the invitees and determining start and end times of common free time periods in the time-ordered list. The common free time periods determined are added to a list of common free time periods (step 315). The availability information determined at step 315 is then sent to the portable electronic device 100 at step 316. In the present example, the calendar event records for the additional invitee are also sent to the portable electronic device 100. Upon receipt of the availability information and the calendar event records at the portable electronic device 100 at step 318, the chart 420 is updated with information for the further invitee in the appropriate one of the invitee rows 424 and the list of common free time periods is updated as shown in the exemplary screen shot of Figure 20 (step 320).

In the embodiment and examples described above with reference to Figure 6, the availability information is determined at the management server 272 of the host computer system 250. In another embodiment, rather than determining the availability information at the management server 272, the availability information can be determined at the portable electronic device 100. Thus, the calendar event records retrieved by the management server 272 are forwarded to the portable electronic device 100 and the portable electronic device determines availability information in a similar manner to that described above with reference to step 315 of Figure 6.

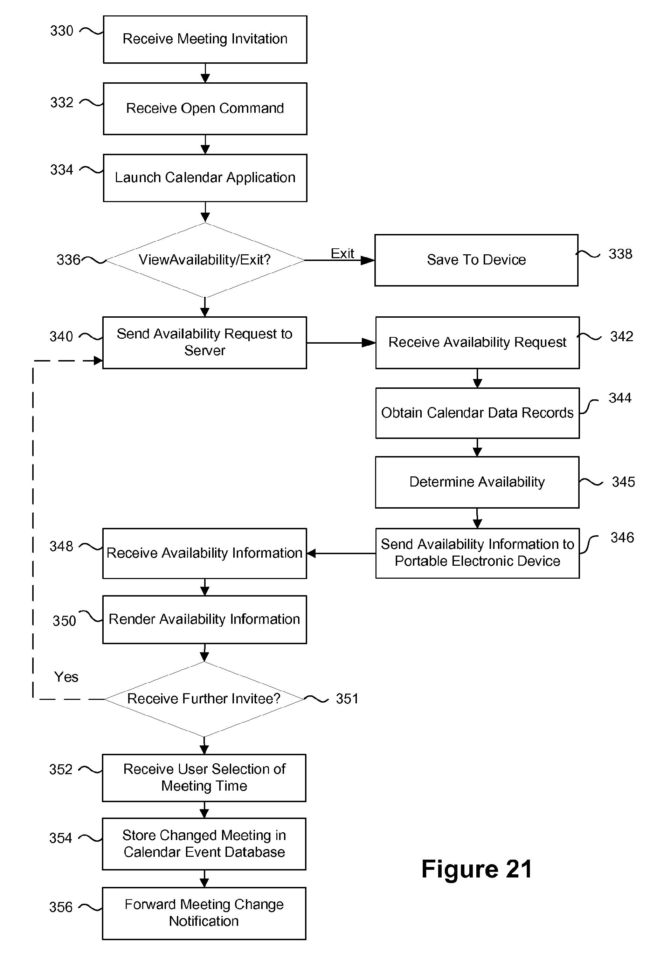

Referring now to Figure 21, there is shown a flow chart illustrating steps in a method of determining time periods for a meeting according to another aspect. It will be appreciated that each of the steps of Figure 21 are carried out by routines or subroutines of software executed by the main processor 102 and processor(s) at the host system 250. Coding of software for carrying out such steps is well within the scope of a person of ordinary skill in the art having regard to the present description.

Each invitee receives the meeting invitation via electronic mail (step 330) and the user of the invitee opens the electronic mail message (step 332), thereby launching the calendar application and displaying the meeting request at an electronic device of the invitee (Step 334). The invitee has the option to display the availability information for all the invitees or can exit the meeting request (step 336) resulting in storage of the calendar event in the calendar of the invitee (step 338). If, on the other hand, the invitee selects the option to display the availability information, a request for availability information within a suitable set of time constraints is sent to the host computer system 250 (step 340). The request is received at the host computer system (step 342) and the calendar data is obtained at the host computer system 250 (step 344). The availability information is determined (step 345) and sent to the electronic device of the invitee (step 346).

When the availability information is received at the electronic device of the invitee (step 348), the availability information is displayed (step 350). The invitee then selects a new start time and end time (step 352) and the meeting request is updated and stored (step 354). The updated meeting invitation is also forwarded to the host computer system for delivery to the remaining invitees.

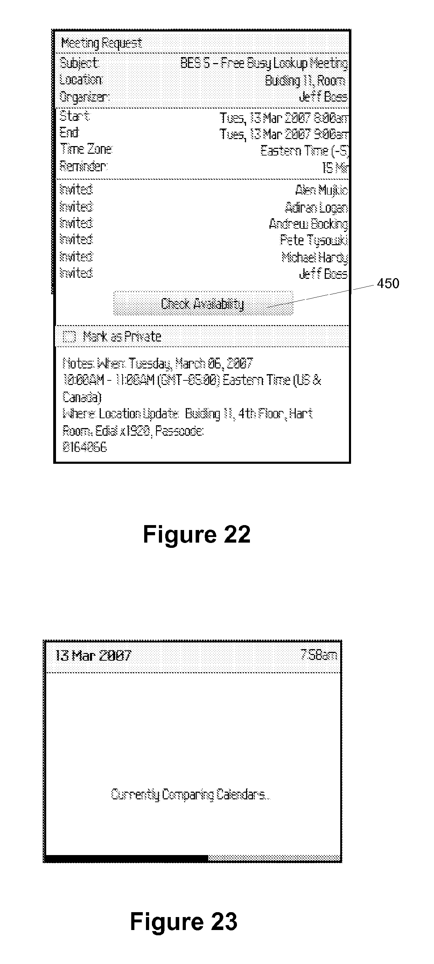

Continued reference is made to Figure 21 and to Figures 22 to 24 to describe a method of determining time periods for a meeting in accordance with a further example. Each invitee receives the meeting invitation via electronic mail on their respective electronic devices (step 330). In one example, an invitee receives the meeting invitation on a portable electronic device that is similar to the portable electronic device 100 of the organizer. Receipt of a user-selected option to open the electronic mail (step 332) results in launching of the calendar application and displaying the meeting request as shown in Figure 22 (step 334). The meeting request includes fields with meeting particulars as entered by the meeting organizer and described hereinabove. The invitee is provided with a check availability option 450 for displaying availability information for all of the invitees for the meeting request (step 336). Alternatively, the invitee can exit the calendar screen shown in Figure 22, resulting in the calendar event being saved to the invitee portable electronic device and saving of the calendar event at the host system 250, in a respective calendar database at the data store 270 (step 338). As indicated, the invitee is also provided with the check availability option 450 to display availability information for each of the invitees if, for example, the user wishes to reschedule the meeting for an alternate time. In response to receipt of a request to check availability of the invitees, a request for invitee availability is sent to the host computer system 250 in the form of a query for calendar event records that fall within the set of time constraints described above with reference to step 310 (step 340). The portable electronic device of the invitee then awaits a response from the host computer system 250, resulting in display of the screen shown in figure 23.

At step 342 the request to check availability of the invitees is received at the host computer system 250 and the management server 272 retrieves all calendar event records that fall within the set of time constraints for each invitee (step 344). Availability information is then determined from the calendar event records retrieved at step 344. According to the present embodiment, the availability information is determined by creating a time-ordered list of calendar event records for all of the invitees and determining start and end times of common free time periods in the time-ordered list. For example, the start times of free time periods are determined based on either the start time of a calendar day or end times of calendar event records while the end times of the free time periods are determined based on either an end time of the calendar day or start times of the next calendar event in the time-ordered list. The common free time periods determined are added to a list of common free time periods (step 345). The availability information in the form of the list of common free time periods determined at step 345 is then sent to the portable electronic device 100 at step 346. In the present example, the calendar event records for each of the invitees are also sent to the portable electronic device 100.

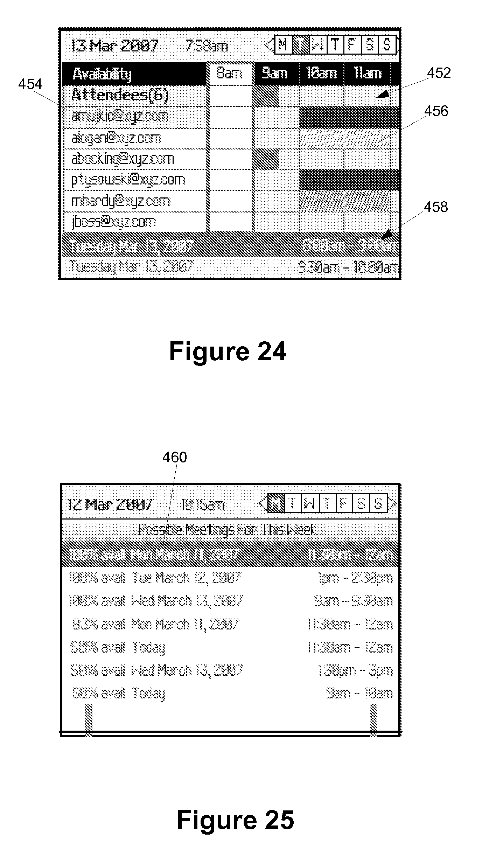

Upon receipt of the availability information along with the calendar event records at the portable electronic device at step 348, the availability information for each user is displayed at step 350. Figure 24 is an exemplary screen shot of the LCD display 110 showing availability information for each of the invitees. As shown in Figure 24, the chart 452 is rendered with each invitee listed in an invitee column 454 and availability information for each invitee rendered in availability rows 456. Again, common free time periods for all invitees are rendered in a list of common free time periods 458 for easy identification. Therefore the free time periods are represented for the invitees in the chart 452 and the list of common free time periods 458 below the chart 452.

The invitee can scroll to different time periods and select new start and end times for the meeting in a similar manner to that described above with reference to Figure 6. Upon receipt of user confirmation of the selected start and end time (step 352), the meeting request is updated with the selected start time, end time and resulting duration, stored locally in the calendar event database at the portable electronic device of the invitee and forwarded to the host computer system 250 for storage in the respective calendar database in the data store 270 (step 354). The update to the meeting invitation is also forwarded to the host computer system 250 for delivery to each of the invitees including the meeting organizer at step 356. The update to the meeting invitation is sent via electronic mail for receipt at respective electronic devices of the invitees.

Again, the availability information is determined at the management server 272 of the host computer system 250 in the embodiment and example described above with reference to Figure 21. In another embodiment, rather than determining the availability information at the management server 272, the availability information can be determined at the portable electronic device 100. Thus, the calendar event records retrieved by the management server 272 are forwarded to the portable electronic device 100 and the portable electronic device determines availability information.

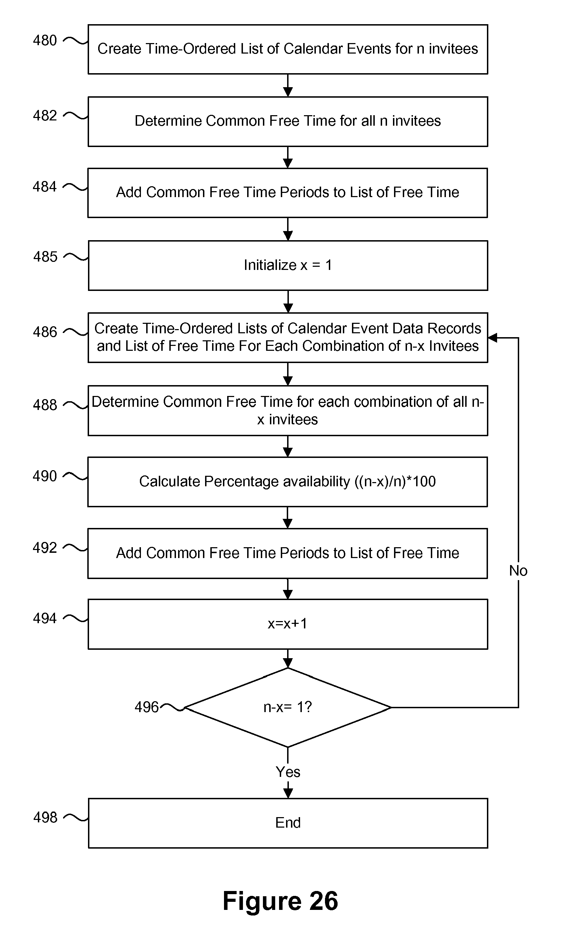

Reference is again made to Figure 6 and to Figures 25 and 26 to describe another example of a method of determining time period for a meeting. The host system 250 receives the request for availability information at step 312. The management server 272 obtains the calendar event information by retrieving all calendar event records that fall within the set of time constraints for each invitee (step 314). The management server 272 determines the list of free time periods (step 315). In the present example, the list of free time periods includes free time periods shared by all invitees as well as time periods during which some invitees are not available according to the calendar event records. Thus, the management server 272 identifies time periods during which all or some of the invitees are available at step 315.

Figure 26 shows a flow chart of substeps for determining the list of free time periods at step 315, according to one embodiment. At step 480, a time-ordered list of calendar event records for all of the invitees is created. The common free time periods shared by the invitees is then determined at step 482 based on the time-ordered list of calendar event records. Start and end times of free time periods are determined based on start and end constraints and based on end and start times of calendar event records. The common free time periods are added to a list of free time periods along with an indication of availability (step 484). Since all invitees are available for the common free time periods shared by all of the invitees, the availability is 100%. A variable, x, is set to 1 to start (step 485). Next, a time-ordered list of both calendar event records and free time periods already determined is created for each combination of n-x invitees (where n is the number of invitees) (step 486). Thus, if there are six invitees, a time ordered list of calendar event records along with the free time periods from the list is created for each combination of 5 invitees. The free time periods for each combination of n-x (n-1) invitees are determined (step 488) and the availability is also calculated (step 490). Start and end times of free time periods are determined based on start and end constraints and based on end and start times of both calendar event records and the free time periods already added to the list. Next, the free time periods along with the calculated availability for each, are added to the list (step 492). The variable x is increased by 1 (step 494) and if n-x = 1 (step 496), the process ends (step 498). Otherwise, the method returns to step 486 where a time-ordered list of both calendar event records and free time periods already determined is created for each combination of n-x invitees (where x is now 2). The method continues until all time slots are added. In the example of Figure 26, free time periods shared by at least two invitees are added to the list. Free time periods can be limited to free time periods shared by any number of invitees.

Returning to Figure 6, the availability information in the form of the list of free time periods is then sent to the portable electronic device 100 at step 316. The availability information is received at the portable electronic device 100 at step 318 and displayed at step 320. In the present example, the availability information is rendered in the form of the list of free times 460 that fall within the set of time constraints, as show in Figure 25. The list of free times 460 is rendered with free times in order of availability and therefore the times during which the maximum number of invitees are available are listed first. Rather than a percentage of invitees available, any representation of relative availability of invitees can be rendered. For example, a fraction can be determined and rendered.

Again, the meeting organizer can add a further invitee at step 321, returning the process to step 308. Alternatively, the user can select one of the meeting times at step 322 by, for example, scrolling using the trackball 113 to the desired meeting time and depressing the trackball 113. The remaining steps in the process are similar to those already described and are therefore not described again herein.

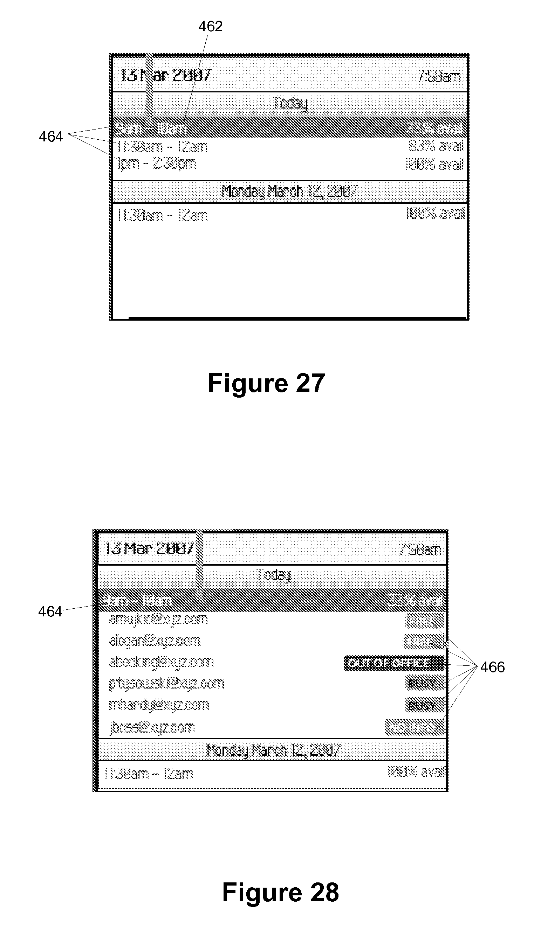

Continued reference is made to Figure 6 to describe yet another example of a method of determining time periods for a meeting. The host system 250 receives the request for availability information at step 312. The management server 272 obtains the calendar event information by retrieving all calendar event records that fall within the set of time constraints for each invitee. In the present example, calendar event records are not forwarded to the portable electronic device 100, instead, the management server 272 identifies time periods in a manner similar to that described above with reference to Figure 26 for scheduling the meeting based on the meeting particulars entered at step 306. Thus, the management server 272 identifies time slots in which all or some of the invitees are available at step 315. The availability information is then sent to the portable electronic device 100 at step 316. The availability information is received at the portable electronic device 100 at step 318 and rendered at step 320. In the present example, the availability information is rendered in the form of a list of possible meeting times 462 in a calendar GUI, in which the meeting times that fall within the set of time constraints are listed, as show in Figure 27. In the exemplary screen shot shown in Figure 27, the list of possible meeting times 462 is rendered in order of date and time.

In the present example, the user can scroll over each time slot 464 in the list of possible meeting times 462 to view the details of availability 466, as shown in Figure 28. Thus, the availability status of each invitee is rendered in response to scrolling to highlight the time slot 464. Alternatively, the availability status of each invitee can be rendered in response to scrolling, followed by selection of the time slot 464.

Again, the meeting organizer can add a further invitee at step 321, returning the process to step 308. Alternatively, the meeting organizer can select one of the meeting times at step 322 by, for example, scrolling using the trackball 113 to the desired meeting time and depressing the trackball 113. The remaining steps in the process are similar to those already described and are therefore not described again herein.

While the examples described with reference to, for example, Figures 7 to 16, 25 and 27 to 28 are described as separate examples, it is contemplated that the user can be provided with availability information based on user-selection of a display option. For example, the user can be provided with an option to select between viewing availability for user-determination of a suitable time from, for example, a chart such as that shown in Figure 11, and viewing availability as determined at either the portable electronic device 100 or the host system 250, as shown in Figure 25 or in Figure 28.

A method of determining time periods for a meeting according to another embodiment includes receiving an indication of at least two invitees for the meeting, obtaining calendar data for the invitees, determining common free time periods for the invitees based on the calendar data, and time-based collecting of calendar event records and the common free time periods for rendering in a day view of a calendar graphical user interface.

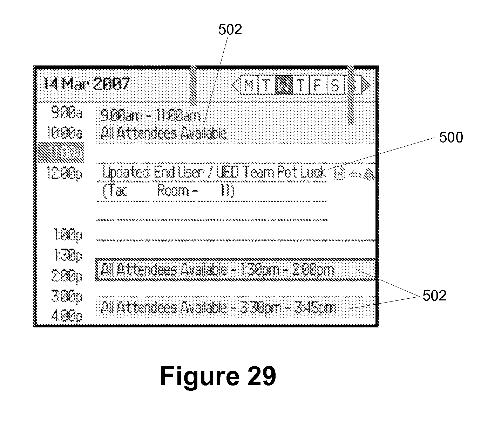

Reference is now made to Figure 6 and to Figure 29 to describe yet another example of an embodiment. As described hereinabove, the calendar application is executed by the processor, thereby launching the calendar application and providing a calendar GUI via the LCD display 110 (step 300). The calendar application is launched, for example, in response to user-selection of the calendar application or on start-up of the portable electronic device 100 and the calendar GUI is provided. The option for a new meeting request is selected and, in response a meeting scheduling GUI is provided at step 304 in which meeting particulars including an indication of invites is entered (step 306). Next, the availability of the invitees is requested at step 308 by, for example, user-selection of an option in the GUI. In response to receipt of the request to check availability of the invitees at the processor 102, a request for invitee availability is sent to the host computer system 250 in the form of a query for calendar event information that falls within a set of time constraints (step 310). The time constraints can be any suitable constraints such as time constraints defining the present day or any other day or time period.

At step 312 the request to check availability of the invitees is received at the host computer system 250 and the management server 272 retrieves calendar event information for each of the invitees (step 314). The management server 272 retrieves all calendar event records that fall within the set of time constraints for each invitee. Availability information is then determined from the calendar event records retrieved at step 314. According to the present embodiment, the availability information is determined by creating a time-ordered list of calendar event records for all of the invitees and determining start and end times of common free time periods in the time-ordered list. For example, the start times of free time periods are determined based on either the start time of a calendar day or end times of calendar event records while the end times of the free time periods are determined based on either an end time of the calendar day or start times of the next calendar event in the time-ordered list. The availability information in the form of common free time period data records determined at step 315 is then sent to the portable electronic device 100 at step 316. In the present example, only the common free time period data records are sent to the portable electronic device 100. It will be appreciated that the calendar event records for the user are resident on the portable electronic device 100 and can be retrieved from the flash memory 108 of the portable electronic device 100. It is also contemplated that time information showing availability status of each invitee can be sent.

Upon receipt of the availability information in the form of common free time period data records at step 318, the availability information for each user is rendered in a GUI of the portable electronic device 100 at step 320. To render the availability information in the GUI, the portable electronic device 100 determines and collects all of the calendar events data records for the user that have at least one of a start time and an end time that fall within a suitable time constraint such as within a one day period, along with all of the common free time period data records for rendering in a day view of a calendar graphical user interface. After time-based collection of both the calendar event records and the common free time period data records, the calendar event records and common free time period data records are rendered in a day view of a calendar graphical user interface (step 320). Figure 29 shows an exemplary screen shot including a calendar event 500 and common free time periods 502 rendered in the calendar GUI.

Again, further invitees can be added. In the present example, no further invitees are added (step 321) and the process proceeds to step 322.

Upon receipt of the user-selection of one of the common free time period data records at step 322, the data record is stored in the flash memory 108 of the portable electronic device 100 as a calendar event (step 324) and is forwarded on to the host computer system 250, for delivery to the message server 268 for storage in a respective calendar database in the data store 270, for example. A meeting notification is sent by way of electronic mail, for delivery via the message server 268 to each of the included invitees at step 326.

In the example described above with reference to Figures 6 and 29, the availability information is determined at the management server 272 of the host computer system 250. In another embodiment, rather than determining the availability information at the management server 272, the availability information can be determined at the portable electronic device 100. Thus, the calendar event records retrieved by the management server 272 are forwarded to the portable electronic device 100 and the portable electronic device determines availability information in a similar manner to that described above with reference to step 315 of Figure 6.

In the preceding description, for purposes of explanation, numerous details are set forth in order to provide a thorough understanding of the embodiments of the present application. However, it will be apparent to one skilled in the art that certain specific details are not required. In other instances, features are shown in block diagram form in order not to obscure the description. For example, specific details are not provided as to whether the embodiments described herein are implemented as a software routine, hardware circuit, firmware, or a combination thereof. Thus, the user is provided with an option to display possible meeting time slots determined based on the availability of the invitees or to display the availability information for user-determination of possible meeting time slots.

It will be appreciated that the list of free time periods created at the portable electronic device 100 is a condensed list of data that is pertinent to use for scheduling appointments or meetings. Additional information, such as time periods when no invitees are available is not included in the list. Condensing availability information to the list of free time periods permits a greater amount of information that is pertinent to use for scheduling to be rendered on the display 110 of the portable electronic device 100. When such a list is rendered on the display 110 of the portable electronic device 100, a greater amount of pertinent information in the form of the number of free time periods is rendered in a single screen for the user of the device to choose from as compared to rendering of further availability information including time periods during which all invitees are unavailable. Thus, during use of the device for scheduling a meeting, fewer screens may be required to be rendered for user-selection of one of the time periods in the list of free time periods, particularly, when there are many time periods during which the invitees are unavailable. The creation of the list of free time periods is advantageous as fewer screens can be rendered while still providing the user with pertinent information. Processing time and battery power are used to render each new screen on the display 110 of the portable electronic device 100 as the processor functions to determine what is rendered and where. Thus, each new screen that is rendered in the calendar GUI uses additional processing time and power consumption. With fewer screens rendered to provide pertinent information, there is therefore a corresponding savings in processing time and power consumption, resulting in less delays as a result of processing time and increased battery life between charging of the battery 130 at the portable electronic device.

The determination of free time periods for invitees based on stored calendar event data for each of the invitees provides availability information for a portable electronic device user. When free time periods are determined at the host system 250 at the management server 272, for example, data transmitted to the portable electronic device 100 can be reduced, thereby reducing transmission time and cost, particularly when data is sent via over-the-air transmission. Further, processing can be carried out at a system server, rather than entirely at the portable electronic device. When free time periods for invitees are determined at either the portable electronic device or at the host system, availability data at the portable electronic device can be reduced to render a list of free time periods or common free time period data records, thereby reducing the memory space required for short or long term storage of such information. This is particularly advantageous at a portable electronic device with limited memory space available.

Embodiments can be represented as a software product stored in a machine-readable medium (also referred to as a computer-readable medium, a processor-readable medium, or a computer usable medium having a computer-readable program code embodied therein). The machine-readable medium can be any suitable tangible medium, including magnetic, optical, or electrical storage medium including a diskette, compact disk read only memory (CD-ROM), memory device (volatile or nonvolatile), or similar storage mechanism. The machine-readable medium can contain various sets of instructions, code sequences, configuration information, or other data, which, when executed, cause a processor to perform steps in a method according to an embodiment. Those of ordinary skill in the art will appreciate that other instructions and operations necessary to implement the described features can also be stored on the machine-readable medium. Software running from the machine-readable medium can interface with circuitry to perform the described tasks.

The above-described embodiments are intended to be examples only. Alterations, modifications and variations can be effected to the particular embodiments by those of skill in the art without departing from the scope of the present application, which is defined solely by the claims appended hereto.

## Claims

1. A computer implemented method of determining time periods for a meeting, the method comprising:
receiving an indication of at least two invitees for said meeting at a processor;
obtaining calendar data for said invitees from a memory device;
determining at said processor, free time periods for said invitees based on said calendar data for said invitees; and
creating a list of the free time periods for said invitees at said processor.

2. The method according to claim 1, wherein determining free time periods comprises determining free time periods common to all of said invitees.

3. The method according to claim 2, wherein determining free time periods comprises determining time periods during which at least two of said invitees are free.

4. The method according to claim 3, comprising determining relative availability for each of said free time periods during which at least two of said invitees are free based on the number of invitees free and the total number of invitees.

5. The method according to claim 4, wherein said relative availability comprises a percentage of available invitees.

6. The method according to claim 4 or claim 5, wherein creating the list of free time periods comprises creating said list in order of relative availability for each of said time periods.

7. The method according to claim 6, wherein creating the list of free time periods comprises ordering in time order the free time periods with equivalent relative availability.

8. The method according to any one of claims 1 to 6, wherein creating the list of free time periods comprises ordering the free time periods in time order.

9. The method according to any one of the preceding claims, wherein obtaining calendar data for said invitees comprises obtaining information for calendar event records that fall within a set of time constraints.

10. The method according to claim 9, wherein determining free time periods comprises determining free time periods that fall within said time constraints.

11. The method according to any one of the preceding claims, comprising sending from a system server said list of the free time periods to an electronic device for use in a calendar graphical user interface.

12. The method according to claim 11, comprising:
receiving from said electronic device, a request for availability status for each one of said invitees for one of said free time periods; and
sending to said electronic device, said availability status for each one of said invitees for said one of said free time periods.

13. The method according to any one of the preceding claims, wherein obtaining calendar data for said invitees comprises:
sending from said electronic device to a system server, identifiers of said invitees; and
receiving at said electronic device from said system server, said calendar data for said invitees.

14. The method according to claim 13, comprising rendering said list in a graphical user interface.

15. The method according to claim 14 wherein each of said free time periods rendered in said graphical user interface is selectable.

16. The method according to claim 15, comprising rendering availability status for each one of said invitees for one of said free time periods in response to receipt of a request for availability status for said one of said free time periods.

17. The method according to claim 15 or claim 16, comprising adding said meeting to a calendar event records database in response to receipt of selection of one of said free time periods.

18. The method according to claim 17, comprising sending an invitation to each of said invitees in response to receipt of said selection.

19. An electronic device for determining time periods for a meeting, the electronic device comprising:
an output unit;
an input unit;
a memory device;
a processor connected to the memory device, the input unit, and the output unit; and
an application stored in the memory device for execution by the processor for causing the electronic device to perform the steps of the method of any one of the preceding claims.

20. A computer program product for an electronic device, the computer program product comprising a computer-readable medium having computer-readable code embodied therein for execution by a processor of said electronic device for causing the electronic device to perform the steps of the method of any one of claims 1 to 18.

21. A communications system comprising a plurality of electronic devices according to claim 19.

## Amended claims

### Amended claims in accordance with Rule 137(2) EPC.

**1.** A computer implemented method of determining time periods for a meeting, the method comprising:
receiving (306) an indication of at least two invitees for said meeting at a processor (102);
obtaining (314) calendar data for said invitees from a memory device (134);
determining (315) at said processor, free time periods for said invitees based on said calendar data for said invitees; and
creating a list of the free time periods in an order based on the number of available invitees at said processor (102).

**2.** The method according to claim 1, wherein determining (315) free time periods comprises first determining free time periods common to all of said invitees.

**3.** The method according to claim 2, wherein determining (315) free time periods comprises determining time periods during which at least two of said invitees are free.

**4.** The method according to claim 3, comprising determining relative availability for each of said free time periods during which at least two of said invitees are free based on the number of invitees free and the total number of invitees.

**5.** The method according to claim 4, wherein said relative availability comprises a percentage of available invitees.

**6.** The method according to any one of claims 1 to 5, wherein creating the list of free time periods comprises ordering the free time periods in time order.

**7.** The method according to any one of the preceding claims, wherein obtaining (314) calendar data for said invitees comprises obtaining information for calendar event records that fall within a set of time constraints.

**8.** The method according to claim 7, wherein determining (315) free time periods comprises determining free time periods that fall within said time constraints.

**9.** The method according to any one of the preceding claims, comprising sending from a system server said list of the free time periods to an electronic device (100) for use in a calendar graphical user interface.

**10.** The method according to claim 9, comprising:
receiving from said electronic device (100), a request for availability status for each one of said invitees for one of said free time periods; and
sending to said electronic device, said availability status for each one of said invitees for said one of said free time periods.

**11.** The method according to any one of the preceding claims, wherein obtaining (314) calendar data for said invitees comprises:
sending from said electronic device to a system server, identifiers of said invitees; and
receiving at said electronic device (100) from said system server, said calendar data for said invitees.

**12.** The method according to claim 11, comprising rendering said list in a graphical user interface.

**13.** The method according to claim 12 wherein each of said free time periods rendered in said graphical user interface is selectable.

**14.** The method according to claim 13, comprising rendering (320) availability status for each one of said invitees for one of said free time periods in response to receipt of a request for availability status for said one of said free time periods.

**15.** The method according to claim 13 or claim 14, comprising adding said meeting to a calendar event records database in response to receipt of selection of one of said free time periods.

**16.** The method according to claim 15, comprising sending an invitation to each of said invitees in response to receipt of said selection.

**17.** An electronic device (100) for determining time periods for a meeting, the electronic device comprising:
an output unit (110);
an input unit (113;116);
a memory device (134);
a processor (102) connected to the memory device, the input unit, and the output unit; and
an application (138) stored in the memory device (134) for execution by the processor (102) for causing the electronic device to perform the steps of the method of any one of the preceding claims.

**18.** A computer program product for an electronic device (100), the computer program product comprising a computer-readable medium having computer-readable code embodied therein for execution by a processor (102) of said electronic device (100) for causing the electronic device to perform the steps of the method of any one of claims 1 to 16.

**19.** A communications system comprising a plurality of electronic devices (100) according to claim 17.
